# EUROPEAN PATENT SPECIFICATION

(11) **EP 4 114 655 B1**
(45) Date of publication and mention of the grant of the patent: **29.10.2025**
(21) Application number: 21710421.5
(22) Date of filing: 03.03.2021
(51) Int. Cl.: B32B 7/12, B32B 15/082, B32B 15/18, B32B 15/20, B32B 27/20, B32B 27/22, B32B 37/12, B32B 37/20, B32B 38/06

(54) **COIL COATING PROCESS**
COIL-COATING-VERFAHREN
PROCÉDÉ DE REVÊTEMENT DE BOBINE

(30) Priority: 03.03.2020 NL 2025038
(43) Date of publication of application: 11.01.2023
(73) Proprietor: Lamcoatings B.V., 1314 CH Almere (NL)
(72) Inventor: BRALIA, Alessandro, 20865 USMATE VELATE MB (IT); D'ORTONA, Antonio, 1314 CH ALMERE (NL)
(74) Representative: EP&C
(86) International application number: PCT/EP2021/055368
(87) International publication number: WO 2021/175937

(56) References cited:
- EP-A2- 0 376 010
- WO-A1-86/01772
- WO-A1-94/19114
- US-A- 3 330 789

## Description

The present invention relates to a method for surface coating a plane metal surface, to a pre-coated metal substrate obtainable by the method, and to a product comprising the pre-coated metal substrate.

### Background Art

In traditional manufacturing processes, steel and other metals arrived at factories in an untreated (besides possibly being oiled or passivated) and unpainted state. Companies would cut and shape the metal and then surface treat and paint the metal components before further assembly. This was costly, time-consuming, and environmentally harmful. Moreover, as formed parts can have many holes, recessed areas, valleys, and hidden areas, they are difficult to clean and uniformly paint. This painting of pre-shaped materials therefore resulted in coatings with defects and thereby low weathering resistance. Coil coating provided a solution to this problem.

Coil coating is a continuous and highly automated industrial process for efficiently coating coils of metal. The definition of a coil coating process according to EN 10169 : 2010 is a "process in which an (organic or inorganic) coating material is applied on rolled metal strip in a continuous process which includes cleaning, if necessary, and chemical pre-treatment of the metal surface and either one-side or two-side, single or multiple application of (liquid) paints or coating powders which are subsequently cured or/and laminating with permanent plastic films". The metal substrate (normally steel or aluminum) is delivered as a coil from the rolling mills. Coil weights vary from 5-6 tons for aluminum and up to about 25 tons for steel. The coil is positioned at the beginning of the line, then unwound at a constant speed, passing through the various pre-treatment and coating processes before being recoiled. Two strip accumulators may be placed at the beginning and the end of the line enabling the work to be continuous. This allows new coils to be added (and finished coils removed) by a metal stitching or welding process without having to slow down or stop the line.

Because the metal is treated before it is cut and formed, the entire surface is cleaned and treated, providing tightly bonded finishes with reduced effort, cost and use of chemicals. Coil coated metal, or pre-coated metal, is more durable and more corrosion-resistant than post painted metal. Typically, after pre-coating, the metal is cut and then formed to its final shape in cold bending processes. For example, sheets of coated metal may be cut from the coil by cutting the unwound metal in an axial direction. In addition, the metal coil may first be slitted into narrower rolls before sheets of the coated metal are cut from the coil by cutting the metal in sheets in an axial direction.

Not all coatings or paints are suitable for use in coil coating. Although the coatings and/or paints may be applied in the process, not all coatings are suitable for use in cold bending processes. Some materials may deform, resulting in visible and invisible faults, such as stress whitening, cracking and/or micro cracking. These faults do not only result in unsatisfactory aesthetics, but also reduce the protective properties of the films, e.g. resulting in premature corrosion. Care should be taken to utilize suitable materials.

The venetian blind industry was the first to utilize pre-coated metal. Nowadays, pre-coated metal is used in a variety of products. It can be formed for many different applications, including those with T bends, without loss of coating quality. Major industries use pre-coated metal in products such as building panels (also known as façade elements), metal roofs, wall panels, garage doors, office furniture (desks, cubicle divider panels, file cabinets, modular cabinets, etc.), home appliances (refrigerators, dishwashers, freezers, range hoods, microwave ovens, washers, dryers, etc.), heating and air-conditioning outer panels and ductwork, commercial appliances, vending machines, foodservice equipment, cooking tins, beverage cans, and automotive panels and parts (fuel tanks, body panels, bumpers, etc.). The list continues to grow, with new industries making the switch from post-painted to pre-coated processes each year.

Available coatings include polyesters, plastisols, polyurethanes, polyvinylidene fluorides (PVDF), epoxies, primers, etc. For each pre-coated product, the coating is built up in a number of layers.

Primer coatings form an important link between the metal pre-treatment and the finish coating. Essentially, a primer is used for its corrosion protection properties. The composition of the primer will vary depending on the type of finish coat used. Primers require compatibility with various pre-treatments and finish coat systems; therefore, they usually comprise a mixture of resin systems.

The finish coat can be the top layer of the end-product or it can be further coated by a film (e.g. polyvinyl chloride (PVC), polypropylene (PP), thermoplastic polyolefins (TPO), polyethylene terephthalate (PET)), e.g. in order to improve properties such as scratch resistance, corrosion properties etc.

As an alternative to paint systems, the steel, which may comprise an anticorrosive primer, can be laminated with a film onto a suitable adhesive in order to form a laminated assembly. A widely used technology is laminating a PVC film on top of the metal coil substrate by use of a polyester based adhesive. When a coil coating line is set-up for creating such PVC laminated assemblies with polyester based adhesives, it is difficult to switch to other technologies. More specifically, changing the chemistry type of the adhesive is not preferred, because it requires thorough cleaning of the equipment used for applying the adhesive. Especially acrylate and polyester based adhesives are not compatible, and switching from one adhesive type to another is cumbersome and expensive due to the down time associated with the cleaning operation.

The end product may further be protected with a strippable film.

Backing coats are applied to the underside (reverse side) of the metal strip (i.e. plane metal substate) with or without the use of a primer. The coating is generally not as thick as the finish coating used for exterior applications. Backing coats are generally not exposed to corrosive environments and not visible in the end application.

WO 86/01772 discloses a traditional coil coating process. On a plane surface, paint- and lacquer material(s) is (are) applied as wet paint in one or several layers, each layer being dried (cured) separately before the application of the next layer and where the total paint layer thickness is 40 - 300 microns, and then a plastic sheet is applied by lamination directly on top of the hot paint surface.

For example, it is disclosed that on pre-treated galvanized steel an acrylic primer was applied by reverse roller coat. As a second layer, a polyvinylchloride plastisol (i.e. plasticized PVC) paint was applied. The second layer could be applied as a sequence of several layers. As a third layer, directly upon the previous hot layer, a clear plastic sheet was applied. After application of the plastic sheet, the product was fed through an embossing steel roller, which produced a relief pattern. The third layer was either clear plasticized plastic sheet of PVC or a polyacrylic sheet. Pigments were present in the second layer, or in the third layer, if this layer was PVC. The second layer had a thickness of from 40 - 300 microns.

A similar process is disclosed in WO 94/19114. First, a primer is applied onto a metal surface, after which a layer of wet plastisol paint is applied as the second coat. A pore-free plastic sheet is subsequently laminated on top. The paint is either a plastisol of an acrylic resin or of a polyester resin, and the plastic sheet may be of an acrylic resin, a fluoropolymer, a polyester, or a polyurethane.

The processes of WO 86/01772 and WO 94/19114 offer the previously mentioned advantages of coil coating. Moreover, the pigments used as well as the possibility to emboss provide for pleasing aesthetics. However, a disadvantage of this process lies in the use of plasticizer(s). Plasticizers or dispersants are additives that increase the plasticity or decrease the viscosity of a material. These are the substances, which are added in order to alter the physical properties of a material, and they are either liquids with low volatility or solids. They decrease the attraction between polymer chains to make them more flexible. Over the last 60 years, more than 30,000 different substances have been evaluated for their plasticizing properties. Of these, only a small number - approximately 50 - are in commercial use today. Over time, plasticizer may migrate through the layers and evaporate. This results in porosity, brittleness and shrinking of the film. In turn, this leads to decreased aesthetics and to corrosion of the underlying metal.

### Description of the Invention

It is an objective of the present invention to overcome one or more of the abovementioned disadvantages, or at least to provide a useful alternative. It is particularly an objective of the present invention to provide a pre-coated laminate structure in which substantially no (i.e. less than 15 wt%, preferably less than 10 wt%, more preferably less than 5 wt%, yet more preferably less than 1% based on the total weight of the organic layers of the laminate structure, i.e. the weight of the pre-coated laminate structure excluding the metal substrate), and most preferably no plasticizer is incorporated, which is corrosion resistant and has pleasing aesthetics. It is a further objective of the present invention to provide a pre-coated laminate structure, which can be shaped in cold bending processes without resulting in excessive cracking and/or stress whitening of the laminate. It is a further objective of the present invention to provide a coil coating process, which is compatible with other frequently used coil coating procedures, i.e. a process wherein the adhesive is compatible with polyester based adhesives used for laminating PVC films. It is an even further objective of the present invention to provide a pre-coated metal sheet with excellent anticorrosion and condensation resistance.

Thereto, the present invention provides a method for surface coating a plane metal substrate, the method comprising the steps of:
- providing a coiled plane metal substrate;
- unwinding the coiled plane metal substrate;
- applying a polyester based adhesive onto a top surface of the unwound plane metal substrate, and
- laminating a film comprising a base acrylic layer onto the polyester based adhesive, thereby forming a laminated assembly.

The polyster based adhesive comprises less than 15 wt%, preferably less than 10 wt%,yetmore preferably less than 5 wt%, even more preferably less than 1 wt% plasticizer. Most preferably, the polyester based adhesive comprises no plasticizer.

The film comprising a base acrylic layer comprises less than 15 wt%, preferably less than 10 wt% more preferably less than 5 wt%, yet more preferably less than 1 wt% plasticizer. Most preferably, the film comprising a base acrylic layer comprises no plasticizer.

Thus, the polyester based adhesive and the film comprising a base acrylic layer each comprise less than 15 wt%, preferably less than 10 wt%, more preferably less than 5 wt%, yet more preferably less than 1 wt% of plasticizer
Thus, in other words, the laminated assembly comprises less than 15 wt%, more preferably less than 10 wt%, even more preferably less than 5 wt%, yet more preferably less than 1 wt% plasticizer based on the total weight of the laminated assembly excluding the metal substrate.

Most preferably, no plasticizer is incorporated in the laminated assembly, that is, the laminated assembly is plasticizer-free, or in other words does not comprise any detectable amount of plasticizer.

The laminated assembly may also be referred to as pre-coated metal substrate or pre-coated laminate structure.

The invention further provides pre-coated metal substrate obtainable by the method of the invention, the pre-coated metal substrate substrate comprising
a plane metal substrate,
a polyester based adhesive layer covering the plane metal substrate,
a film comprising a base acrylic layer, the base acrylic layer covering the polyester based adhesive layer.

Also provided is a product comprising a pre-coated metal substrate according to the invention, in particular a façade panel.

The method according to the invention is preferably performed in a coil coating line. The coiled plane metal substrate or simply metal coil can be any metal, which is suitable to be used in a coil coating process. It may for example be cold rolled steel, stainless steel, metallic coated steel (i.e. hot dip galvanized steel), aluminium, etc. The coil may have a width of maximally 1.8 m, typically about 1.0 to 1.5 m. The plane metal substrate preferably has a thickness of between 0.17 mm to 3.0 mm. At these thicknesses, the metal can suitably be treated by a coil coating process such as the method according to the invention. More preferably, the plane metal substrate, i.e. metal strip, has a thickness of between 0.30 mm and 1.50 mm, as this is the optimal thickness for a coil coating process. After the coil coating process, the laminated assembly may be processed, i.e. cut, in slit coils or plane sheets. There are two types of cutting, referred to as slitting, to produce slit coils: log slitting and rewind slitting. In log slitting the coil is treated as a whole (the 'log') and one or more slices are taken from it without an unrolling/re-reeling process. In rewind slitting the web is unwound and run through a machine, passing through knives or lasers, before being rewound on one or more shafts to form narrower rolls. Sheets may be formed by further cutting the rolled metal strip forming the coil or the slit coil in the desired dimensions.

The plane metal substrate may optionally be pre-treated, for example by degreasing, optionally followed by washing, rinsing, passivation and drying, and/or pre-treatment may comprise chemical pre-treatment based on chrome VI, chrome III or a chrome free passivant. Examples of chrome free passivants are titanium and/or zirconium compounds, particularly complex fluorides of these elements. Additionally or alternatively, a metal substrate primer (i.e. a primer applied on the plane metal substrate, preferably on the top surface of the plane metal substrate) may be used to pre-treat the metal surface before application of the adhesive layer.

Preferably, the top surface of the plane metal substrate comprises a metal substrate primer. Suitable primers are e.g. epoxy, polyester, epoxypolyester, acrylics, polyurethane, etc. Preferably, the metal substrate primer comprises an epoxy resin. The metal substrate primer may be cured by heating the metal coil to a temperature of more than 180°C. The primer may be applied in a layer ranging from 1 µm to 20 µm, preferably from 1 µm to 10 µm, more preferably from 1 µm to 5 µm.

The film, which comprises a base acrylic layer, is laminated on top of the adhesive, thereby forming a laminated assembly. Thus, the laminated assembly comprises at least three layers, in the following order: plane metal substrate, polyester based adhesive layer, base acrylic layer. The base acrylic layer is optionally pre-treated with a primer, such as an acrylic primer or a vinylic primer. In other words, the film may comprise a base acrylic layer primer (i.e. a primer applied on the base acrylic layer), which primer is preferably an acrylic primer or a vinylic primer. The film may be applied onto the plane metal substrate or, if present, onto the plane metal substrate primer with the base acrylic layer or base acrylic layer primer being oriented towards the plane metal substrate. Thus, in some embodiments, the laminated assembly comprises, in the following order: a plane metal substrate, optionally a metal substrate primer, a polyester based adhesive layer, optionally a base acrylic layer primer, and the base acrylic layer. Thus, in the laminated assembly, 1) the polyester based adhesive adheres the base acrylic layer to the top surface of the plane metal substrate, 2) the polyester based adhesive adheres the base acrylic layer to the metal substrate primer, 3) the polyester based adhesive adheres the base acrylic layer primer to the top surface of the plane metal substrate, or 4) the polyester based adhesive adheres the base acrylic layer primer to the metal substrate primer.

The base acrylic layer comprises an acrylic polymer. The base acrylic layer preferably consists essentially of the acrylic polymer and optional pigments. The phrase consists essentially of in this respect should be taken to mean at least 90 wt%, preferably at least 95 wt%, more preferably at least 99 wt%, most preferably at least 99.9 wt% of the base acrylic layer consists of the acrylic polymer and the pigments combined. The remaining components of the base acrylic layer, if any, preferably do not comprise any plasticizing agents. Over time, such plasticizing agents, also called plasticizers, may migrate through the layers and evaporate. This results in porosity, brittleness and shrinking of the film. In turn, this leads to decreased aesthetics and to corrosion of the underlying metal. Examples of plasticizers are phthalate-based plasticizers (e.g. bis(2-ethylhexyl) phthalate (DEHP), bis(2-propylheptyl) phthalate (DPHP), etc.), trimellitates (e.g. trimethyl trimellitate (TMTM), n-octyl trimellitate (OTM), etc.), adipates, sebacates, maleates, azelates, benzoates, terephthalates, sulphonamides, organophosphates, glycols, monoglycerides, citrates, (vegetable) oils, etc.

Preferably, the base acrylic layer comprises up to 15 wt% pigments, and thus at least 75, 80, 84 or 84.9 wt% acrylic polymer. At higher pigment concentrations, the film becomes less flexible. This may lead to cracking, tearing and/or pitting of the film during further processing such as cold bending. Suitable pigments are for example metal oxides, such as titanium dioxide, or organic pigments. Common types of organic pigments can include azo pigments, lake pigments, phthalocyanine pigments and quinacridone pigments.

Preferably, base acrylic layer has a thickness of between 20 and 300 µm. At such thicknesses, a film comprising the acrylic layer can suitably be laminated onto the adhesive layer, and, when present in the laminated assembly, the layer can be bent in cold bending processes without resulting in excessive cracking and/or stress whitening. More preferably, the acrylic layer has a thickness of between 100 and 200 µm. At lower thicknesses, the amount of pigments that can be incorporated is insufficient to provide for an opaquely colored layer. At higher thicknesses, the extra layer thickness does not provide any particular advantage such as protective properties or aesthetics, with a disadvantage being increased material costs. This range provides the optimum balance between aesthetics and protective properties.

The acrylic polymer is a polymer, which is formed by the polymerization of acrylate monomers. Acrylate monomers are based on the structure of acrylic acid, which consists of a vinyl group and a carboxylic acid ester terminus. Typical acrylate monomers are acrylic acid, methyl acrylate, methyl methacrylate, butyl methacrylate, etc. Thus, the acrylic polymer may comprise monomers of acrylic acid, methyl acrylate, methyl methacrylate, and/or butyl methacrylate.

The acrylic polymer may be a homopolymer or it may be a copolymer of two or more different monomers. Such a copolymer may be a random copolymer, i.e. a polymer with random distribution of the monomer units along the polymer chain. Alternatively, the copolymer may be a block copolymer, in which the different monomers are grouped together in two or more blocks. The acrylic polymer may also be a mixture of homo- and/or copolymers. Preferably, the acrylic polymer comprises a homopolymer, i.e. a polymer consisting of identical monomer units.

Preferably, the acrylic polymer comprises polymethyl methacrylate (PMMA). More preferably, the acrylic polymer consists of PMMA. This acrylic polymer can be extruded or calendered and subsequently it may conveniently be applied as a flexible film in the coil coating process. After the coil coating process, the coated coil may be cut in slit coils and/or metal sheets and shaped to the final form in cold bending processes. When the base acrylic layer comprises PMMA, the cutting and shaping during cold bending does not result in excessive cracking and/or stress whitening.

Tacticity is the relative stereochemistry of adjacent chiral centers within a macromolecule. The practical significance of tacticity rests on the effects on the physical properties of the polymer. The regularity of the macromolecular structure influences the degree to which it has rigid, crystalline long-range order or flexible, amorphous long-range disorder. The polymethyl methacrylate may be either isotactic, syndiotactic, and/or atactic. Isotactic and syndiotactic polymers are usually more crystalline, whereas atactic polymers tend to be amorphous and more flexible. Block structures in which isotactic and/or syndiotactic sequences are alternated with atactic monomer sequences are also possible. A sequence is defined by few, such as at least 10, coupled monomers in a row, but can be up to thousands of monomers. Such more complex block structures enable further tuning of the polymer properties. For example, such block structures enable tuning of the mechanical properties to make the material strong, but flexible. In this way, the cold bending properties of the polymethylmethacrylate can be further optimized to suit the cold bending needs.

The polyester based adhesive layer may be applied by reverse roller coat or spray coating. The layer is preferably applied by reverse roller coat.

The adhesive layer preferably has a thickness of about 5 - 50 µm, more preferably of about 5 - 20 µm, most preferably of about 5 - 10 µm.

The adhesive is a polyester based adhesive. Polyester is a category of polymers that contain the ester functional group in their main chain. Synthesis of polyesters is generally achieved by a polycondensation reaction of an acid component and a hydroxy component, specifically a diacid and a diol. Identical polymers however may be formed by the reactions of acid anhydrides and diols, or by the reactions of dimethylesters with diols. It is therefore to be understood that a polyester that is described as e.g. comprising terephthalic acid and glycol may be formed by a reaction between glycol and terephtalic acid, but also between glycol and dimethyl terephthalate or between glycol and terephtalic anhydride or any other comparable chemical reaction leading to the same polymer structure. Another type of polyester may be synthesized by condensation of a hydroxy carboxylic acid.

The polyester based adhesive may comprise a mixture of different polyester polymers. Therefore, it is to be understood that components of the polyester as further described below may be present in the same polyester polymer, or in different polymers in case the adhesive comprises a mixture of different polyester polymers.

Preferably, the polyester based adhesive comprises an aromatic acid component, more preferably an aromatic acid component chosen from the group consisting of phtalic acid, isophtalic acid, and terephthalic acid, and combinations thereof.

Preferably, the aromatic acid component comprises a combination of two aromatic acid components, more preferably a combination of terephthalic acid and isophthalic acid.

Preferably, the weight ratio of terephthalic acid : isophthalic acid is in the range of 1 : 1 to 1 : 2, more preferably 1 : 1.2 - 1 : 2.

The polyester based adhesive furthermore preferably comprises an aliphatic diol, preferably a C2 - C10, more preferably a C2 - C6 aliphatic diol, most preferably a C2 - C5 aliphatic diol. The aliphatic diol may be linear, such as ethylene glycol, 1,3-propylene diol, 1,4-butylene diol, etc., or the aliphatic glycol may be branched, such as propylene glycol, butylene glycol, pentylene glycol, neopentyl glycol, hexylene glycol, etc. Preferably, the aliphatic diol is branched, most preferably the aliphatic diol is neopentyl glycol.

The polyester based adhesive may further comprise a dihydroxy ether, preferably diethylene glycol.

The polyester based adhesive may further comprise trifunctional components, such as a triacid and/or a triol. The presence of trifunctional components causes cross-linking of the polymer chains, thereby increasing the interlayer adhesion. The triacid is preferably an aromatic triacid, such as trimellitic acid. The triol preferably is an aliphatic triol, such as trimethylol propane or glycerol or a combination of both.

The film may further comprise additional layers. For example, an ink pattern may be applied on the base acrylic layer, thereby making it possible to apply a wide range of esthetic images. The ink pattern does not need to fully cover the base acrylic layer, as a printed design may comprise unprinted areas. Thus, preferably, the film further comprises an ink layer at least partially covering the base acrylic layer.

Preferably, the base acrylic layer and/or the ink layer are covered by a top acrylic layer, preferably a clear acrylic layer, i.e. not comprising any visible pigments. Thus, preferably, the film further comprises a top acrylic layer covering the previous layers. The top acrylic layer preferably consists essentially of an acrylic polymer. The phrase consists essentially of in this respect should be taken to mean at least 90 wt%, preferably at least 95 wt%, more preferably at least 99 wt%, most preferably at least 99.9 wt% of the top acrylic layer consists of the acrylic polymer. The remaining components of the top acrylic layer, if any, preferably do not comprise any plasticizing agents. The acrylic polymer used for the top acrylic layer may be the same as or different from the acrylic polymer of the base acrylic layer.

Preferably, the film further comprises a fluorinated top layer covering the previous layer or layers, the top layer preferably comprising polyvinylidene fluoride (PVDF) or polyvinyl fluoride (PVF), more preferably PVDF. Thus, in a preferred embodiment, the base acrylic layer (optionally comprising the ink layer), or the top acrylic layer if present, is covered by the fluorinated top layer. Preferably, the fluorinated top layer is a clear layer, i.e. not comprising any visible pigments. Preferably, the fluorinated top layer does not comprise any plasticizer. Polyvinylidene fluoride (PVDF) or polyvinyl fluoride (PVF) cover films improve tear resistance, impact resistance, scratch resistance, chemical resistance, and cleanability, with PVDF being most preferred.

The best properties are obtained when a pigmented base film is covered with a clear acrylic layer and this in turn with a clear protective layer of PVDF.

The method according to the invention also comprises embossing the laminated assembly. This provides for an aesthetic 3D effect.

Finally, the laminated assembly may further comprise a strippable film. The strippable film covers the lower layers and may be applied as a final step in the coil coating process, i.e. the method of the invention, before the unwound and laminated coil is rewound, in order to protect the laminated surface of the coated coil during shipment and handling.

The method of the invention further comprises applying a backing coating to a second surface of the coiled plane metal substrate. Different types of back coats can be applied depending on the customer demand and the kind of metal substrate. An epoxy primer is a common choice. The backing coating may for example be applied at the same time as the adhesive.

The pre-coated metal coil or slit coil of the invention may be cut into pre-coated metal sheets. These metal sheets may be formed into their final shape by cold bending and applied in a product, such as a façade panel.

The product according to the invention preferably has a Corrosion resistance of at least 750 hours when measured according to EN13523-8 (identical to ASTM B117). The product according to the invention preferably has a condensation resistance at 38 °C of at least 1500 h according to ISO 6270 (identical to ASTM D585).

All materials used in the invention (including the primers, the polyester based adhesive and the film comprising a base arylic layer), preferably comprise less than 15 wt% of plasticizer, more preferably less than 10 wt%, even more preferably less than 5 wt%, yet more preferably less than 1 wt%. Most preferably, these materials do not comprise plasticizer, i.e. they are plasticizer-free, or in other words are free of any detectable amount of plasticizer.

### Brief description of the Figures

Fig. 1: Schematic picture of a coil coating line.
Fig. 2: Schematic picture of a laminated assembly according to the invention.

### Detailed description of the Figures

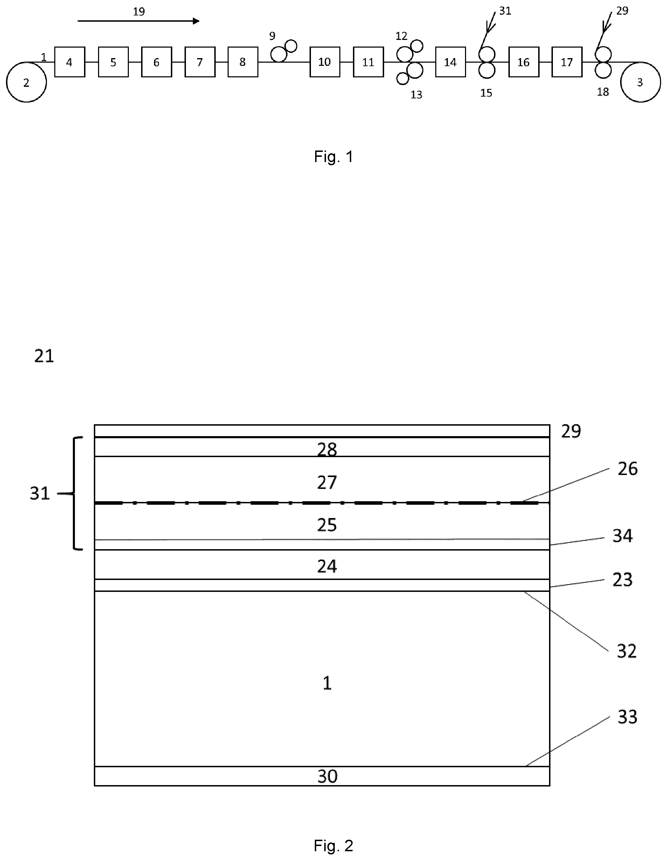

Fig. 1 depicts a typical coil coating line for carrying out a process according to the invention. In the embodiment shown, a coil 2 of a plane metal substrate 1 is unwound and transported through the line in transport direction 19. The substrate is degreased in degreasing zone 4, washed in washing zone 5, rinsed in rinsing zone 6, and subsequently passivated and dried in passivation zone 7 and drying zone 8, respectively. A primer 23 is applied by reverse roller coat in zone 9, cured by heating in primer heating zone 10, and cooled with water in primer cooling zone 11. In the depicted embodiment, the adhesive 24 and a back-coat 30 are applied simultaneously in adhesive and back-coat coating zones 12 and 13, respectively. Both the adhesive 24 and back-coat 30 are applied by reverse roller coat. Subsequent heating is performed in adhesive heating zone 14. The film 31 is laminated onto the metal substrate 1 in lamination zone 15. Subsequent cooling is performed by cooling with water in laminate cooling zone 16, followed by drying in laminate drying zone 17. A strippable film 29 is applied in strippable film lamination zone 18. The metal substrate is rewound onto coil 3.

Fig. 2 depicts an embodiment of a laminated assembly 21 according to the invention. Shown are the plane metal substrate 1, of which a first surface 32 is subsequently covered by a layer of metal substrate primer 23, polyester based adhesive layer 24, film 31, and strippable film 29. The second surface 33 is covered by a backing coating 30. Film 31 comprises in order layers 34, 25, 26, 27, and 28, i.e. base acrylic layer primer 34, base acrylic layer 25, ink layer 26, top acrylic layer 27 and fluorinated top layer 28.

### Materials

Multilayer film - Multilayer, plasticizer free, film comprising in order: a pigmented PMMA base layer, a printing ink layer, a transparent PMMA layer, a transparent PVDF top layer.
Polyester based adhesive - Commercially available polyester based adhesive comprising therephthalic acid, isophthalic acid, (in a ratio of between 1:1 and 2:1), and neopentyl glycol as main components, according to the most preferred embodiments of the invention.
Comparative Adhesive 1 - Commercially available acrylic based adhesive.
Comparative Adhesive 2 - Commercially available vinylic based adhesive.
Comparative Paint 3 - Polyester resin comprising > 25 wt% of plasticizer.

### Example 1

A coil of galvanized steel was unwound, degreased and pre-treated by a passivant liquid, a primer was applied by using a reverse roll coating process typically at a line speed of 20 m/min resulting in a film thickness of 8 µm. The primer was cured at a temperature of up to 232 °C for a total of 30 sec. Then the coil was cooled down by water and dried up. The polyester based adhesive was applied in a film thickness of 8 µm by using a reverse roll coating process at a line speed of 20 m/min, curing it up to 232°C for a total of 30 sec. Then the film was laminated immediately outside the oven. Then the coil was cooled down by water and dried up. A protective film was applied in line and the coil was rewound.

### Comparative examples

Comparative examples were prepared in a similar fashion as for example 1, however, the adhesives were comparative adhesive 1, and comparative adhesive 2, respectively. A further comparative example is prepared which comprises comparative paint 3.

**Table 1.**

| | ex1 | c1 | c2 | c3 |
|---|---|---|---|---|
| Corrosion resistance EN13523-8 (ASTM B117) | 750 h | 750 h | 500 h | < 500 h |
| Condensation resistance at 38 °C ISO 6270 (ASTM D585) | 1500 h | 1500 h | 1000 h | < 1000 h |

As can be seen from table 1, the vinylic based adhesive provided acceptable corrosion resistance and condensation resistance properties. However, both example 1 as well as the acrylic based adhesive provided for excellent corrosion resistance and condensation resistance. The acrylic based adhesive is however undesirable for use on a coil coating line because such an adhesive is not compatible with other frequently used adhesives in coil coating. Therefore, the polyester based adhesive has the advantage of providing excellent corrosion resistance as well as condensation resistance, while being compatible with other frequently used adhesives.

When instead of an adhesive, a plastisol paint is used (c3), the corrosion and condensation resistance provide inferior results. Moreover, the aesthetic properties of example c3 are inferior to those of the other examples.

## Claims

1. A method for surface coating a plane metal substrate, the method comprising the steps of:
- providing a coiled plane metal substrate;
- unwinding the coiled plane metal substrate;
- applying a polyester based adhesive onto a top surface of the unwound plane metal substrate, and
- laminating a film comprising a base acrylic layer onto the polyester based adhesive, thereby forming a laminated assembly, wherein the polyester based adhesive and the film comprising a base acrylic layer each comprise less than 15 wt%, more preferably less than 10 wt%, even more preferably less than 5 wt%, yet more preferably less than 1 wt% of plasticizer.

2. Method according to claim 1, wherein no plasticizer is incorporated in the laminated assembly.

3. Method according to claim 1, wherein the top surface of the plane metal substrate comprises a metal substrate primer.

4. Method according to claim 1 or 2, wherein the film comprises a base acrylic layer primer.

5. Method according to any one of the preceding claims, wherein the polyester based adhesive comprises an aromatic acid component, preferably wherein the aromatic acid component comprises a combination of terephtalic acid and isophtalic acid, more preferably wherein the weight ratio of terephthalic acid : isophtalic acid is in the range of 1 : 1 to 1 : 2, preferably 1 : 1.2 to 1 : 2.

6. Method according to any one of the preceding claims, wherein the base acrylic layer comprises a methacrylate, preferably polymethyl methacrylate (PMMA), and/or, wherein the base acrylic layer comprises one or more pigments.

7. Method according to any one of the preceding claims, wherein the film further comprises one or more of the following:
- an ink layer at least partially covering the base acrylic layer,
- a top acrylic layer covering the previous layers, preferably wherein the top acrylic layer is a clear layer,
- a fluorinated top layer covering the previous layers, the top layer preferably comprising polyvinylidene fluoride (PVDF) or polyvinyl fluoride (PVF), more preferably PVDF.

8. Method according to any one of the preceding claims, further comprising and/or applying a strippable film covering the lower layers.

9. Method according to any one of the preceding claims, further comprising applying a backing coating to a bottom surface of the plane metal substrate.

10. Method according to any one of the preceding claims, further comprising rewinding the laminated assembly resulting in a laminate coil.

11. Method according to any one of the preceding claims, further comprising cutting the laminated assembly to produce slit coils.

12. Method according to any one of the preceding claims, further comprising cutting the laminated assembly to produce pre-coated metal sheets.

13. Pre-coated metal substrate obtainable by the method of any one of the preceding claims, the pre-coated metal substrate comprising
a plane metal substrate,
a polyester based adhesive layer covering the plane metal substrate,
a film comprising a base acrylic layer, the base acrylic layer covering the polyester based adhesive layer, wherein the polyester based adhesive layer and the film comprising a base acrylic layer each comprise less than 15 wt%, more preferably less than 10 wt%, even more preferably less than 5 wt%, yet more preferably less than 1 wt% of plasticizer.

14. Product comprising a pre-coated metal substrate according to claim 13.

15. Product according to claim 14, which is a façade panel, preferably a structured façade panel.

## Patentansprüche

1. Verfahren zur Oberflächenbeschichtung eines ebenen Metallsubstrats, wobei das Verfahren die Schritte umfasst:
- Bereitstellen eines aufgerollten ebenen Metallsubstrats;
- Abrollen des aufgerollten ebenen Metallsubstrats;
- Aufbringen eines Klebstoffs auf Polyesterbasis auf eine obere Oberfläche des abgerollten ebenen Metallsubstrats und
- Laminieren einer Folie, die eine Acrylgrundschicht umfasst, auf den Klebstoff auf Polyesterbasis, um eine laminierte Anordnung zu bilden, wobei der Klebstoff auf Polyesterbasis und die Folie, die eine Acrylgrundschicht umfasst, jeweils weniger als 15 Gew.-%, bevorzugter weniger als 10 Gew.-%, noch bevorzugter weniger als 5 Gew.-%, sogar noch bevorzugter weniger als 1 Gew.-%, an Weichmacher umfassen.

2. Verfahren nach Anspruch 1, wobei kein Weichmacher in die laminierte Baugruppe aufgenommen wird.

3. Verfahren nach Anspruch 1, wobei die obere Oberfläche des ebenen Metallsubstrats eine Metallsubstratgrundierung umfasst.

4. Verfahren nach Anspruch 1 oder 2, wobei die Folie eine Acrylgrundschicht-Grundierung umfasst.

5. Verfahren nach einem der vorstehenden Ansprüche, wobei der Klebstoff auf Polyesterbasis eine aromatische Säurekomponente umfasst, vorzugsweise wobei die aromatische Säurekomponente eine Kombination von Terephtalsäure und Isophtalsäure umfasst, bevorzugter wobei das Gewichtsverhältnis von Terephthalsäure : Isophtalsäure in dem Bereich von 1 : 1 bis 1 : 2, vorzugsweise 1 : 1,2 bis 1 : 2, liegt.

6. Verfahren nach einem der vorstehenden Ansprüche, wobei die Acrylgrundschicht ein Methacrylat, vorzugsweise Polymethylmethacrylat (PMMA), umfasst und/oder wobei die Acrylgrundschicht ein oder mehrere Pigmente umfasst.

7. Verfahren nach einem der vorstehenden Ansprüche, **dadurch gekennzeichnet, dass** die Folie ferner eines oder mehrere der folgenden umfasst:
- eine Tintenschicht, die die Acrylgrundschicht wenigstens teilweise bedeckt;
- eine obere Acrylschicht, die die vorherigen Schichten bedeckt, wobei die obere Acrylschicht vorzugsweise eine klare Schicht ist;
- eine fluorierte Deckschicht, die die vorherigen Schichten bedeckt, wobei die Deckschicht vorzugsweise Polyvinylidenfluorid (PVDF) oder Polyvinylfluorid (PVF), bevorzugter PVDF, umfasst.

8. Verfahren nach einem der vorstehenden Ansprüche, ferner umfassend und/oder Aufbringen einer abziehbaren Folie, die die unteren Schichten bedeckt.

9. Verfahren nach einem der vorstehenden Ansprüche, ferner umfassend Aufbringen einer Trägerbeschichtung auf eine untere Oberfläche des ebenen Metallsubstrats.

10. Verfahren nach einem der vorstehenden Ansprüche, ferner umfassend Wiederaufrollen der laminierten Anordnung, um eine Laminatrolle zu erhalten.

11. Verfahren nach einem der vorstehenden Ansprüche, ferner umfassend Schneiden der laminierten Anordnung, um Spaltrollen zu bilden.

12. Verfahren nach einem der vorstehenden Ansprüche, ferner umfassend Schneiden der laminierten Anordnung, um vorbeschichtete Metallbleche zu bilden.

13. Vorbeschichtetes Metallsubstrat, erhältlich durch das Verfahren nach einem der vorstehenden Ansprüche, wobei das vorbeschichtete Metallsubstrat umfasst
ein ebenes Metallsubstrat,
eine Klebstoffschicht auf Polyesterbasis, die das planare Metallsubstrat bedeckt,
eine Folie, die eine Acrylgrundschicht umfasst, wobei die Acrylgrundschicht die Klebstoffschicht auf Polyesterbasis bedeckt, wobei die Klebstoffschicht auf Polyesterbasist und die Folie, die eine Acrylgrundschicht umfasst, jeweils weniger als 15 Gew.-%, bevorzugter weniger als 10 Gew.-%, noch bevorzugter weniger als 5 Gew.-%, sogar noch bevorzugter weniger als 1 Gew.-%, an Weichmacher umfassen.

14. Produkt, umfassend ein vorbeschichtetes Metallsubstrat nach Anspruch 13.

15. Produkt nach Anspruch 14, das eine Fassadenplatte, vorzugsweise eine strukturierte Fassadenplatte, ist.

## Revendications

1. Procédé pour le revêtement de surface d'un substrat métallique plan, le procédé comprenant les étapes de :
- fourniture d'un substrat métallique plan enroulé ;
- déroulement du substrat métallique plan enroulé ;
- application d'un adhésif à base de polyester sur une surface supérieure du substrat métallique plan déroulé, et
- stratification d'un film comprenant une couche d'acrylique de base sur l'adhésif à base de polyester, formant ainsi un ensemble stratifié, dans lequel l'adhésif à base de polyester et le film comprenant une couche d'acrylique de base comprennent chacun moins de 15 % en poids, de préférence moins de 10 % en poids, de manière encore plus préférée moins de 5 % en poids, et de manière encore plus préférée moins de 1 % en poids de plastifiant.

2. Procédé selon la revendication 1, dans lequel aucun plastifiant n'est incorporé dans l'ensemble stratifié.

3. Procédé selon la revendication 1, dans lequel la surface supérieure du substrat métallique plan comprend un apprêt de substrat métallique.

4. Procédé selon la revendication 1 ou 2, dans lequel le film comprend un apprêt de couche d'acrylique de base.

5. Procédé selon l'une quelconque des revendications précédentes, dans lequel l'adhésif à base de polyester comprend un composant acide aromatique, de préférence dans lequel le composant acide aromatique comprend une combinaison d'acide téréphtalique et d'acide isophtalique, plus préférablement dans lequel le rapport pondéral acide téréphtalique:acide isophtalique est dans la plage de 1 : 1 à 1 : 2, de préférence 1 : 1,2 à 1 : 2.

6. Procédé selon l'une quelconque des revendications précédentes, dans lequel la couche d'acrylique de base comprend un méthacrylate, de préférence un polyméthacrylate de méthyle (PMMA), et/ou dans lequel la couche d'acrylique de base comprend un ou plusieurs pigments.

7. Procédé selon l'une quelconque des revendications précédentes, dans lequel le film comprend en outre un ou plusieurs des éléments suivants :
- une couche d'encre recouvrant au moins partiellement la couche d'acrylique de base,
- une couche d'acrylique supérieure recouvrant les couches précédentes, de préférence dans lequel la couche d'acrylique supérieure est une couche transparente,
- une couche supérieure fluorée recouvrant les couches précédentes, la couche supérieure comprenant de préférence un poly(fluorure de vinylidène) (PVDF) ou un poly(fluorure de vinyle) (PVF), plus préférentiellement un PVDF.

8. Procédé selon l'une quelconque des revendications précédentes, comprenant en outre et/ou appliquant un film pelable recouvrant les couches inférieures.

9. Procédé selon l'une quelconque des revendications précédentes, comprenant en outre l'application d'un revêtement de support sur une surface inférieure du substrat métallique plan.

10. Procédé selon l'une quelconque des revendications précédentes, comprenant en outre le rembobinage de l'ensemble stratifié résultant en une bobine stratifiée.

11. Procédé selon l'une quelconque des revendications précédentes, comprenant en outre la découpe de l'ensemble stratifié pour produire des bobines fendues.

12. Procédé selon l'une quelconque des revendications précédentes, comprenant en outre la découpe de l'ensemble stratifié pour produire des tôles métalliques pré-revêtues.

13. Substrat métallique pré-revêtu pouvant être obtenu par le procédé selon l'une quelconque des revendications précédentes, le substrat métallique pré-revêtu comprenant
un substrat métallique plan,
une couche d'adhésif à base de polyester recouvrant le substrat métallique plan,
un film comprenant une couche d'acrylique de base, la couche d'acrylique de base recouvrant la couche d'adhésif à base de polyester, dans lequel la couche d'adhésif à base de polyester et le film comprenant une couche d'acrylique de base comprennent chacun moins de 15 % en poids, de préférence moins de 10 % en poids, de manière encore plus préférée moins de 5 % en poids, et de manière encore plus préférée moins de 1 % en poids de plastifiant.

14. Produit comprenant un substrat métallique pré-revêtu selon la revendication 13.

15. Produit selon la revendication 14, qui est un panneau de façade, de préférence un panneau de façade structuré.
